**Europäisches Patentamt**

**European Patent Office**

**Office européen des brevets**

(19)

(11) Veröffentlichungsnummer: **0 273 863**
**B1**

(12) **EUROPÄISCHE PATENTSCHRIFT**

(45) Veröffentlichungstag der Patentschrift:
**21.03.90**

(51) Int. Cl.⁴: **F16B 21/06**

(21) Anmeldenummer: **87810724.2**

(22) Anmeldetag: **08.12.87**

(54) **Bolzen und Gegenstück.**

(30) Priorität: **11.12.86  CH 4967/86**

(43) Veröffentlichungstag der Anmeldung:
**06.07.88 Patentblatt 88/27**

(45) Bekanntmachung des Hinweises auf die Patenterteilung:
**21.03.90 Patentblatt 90/12**

(84) Benannte Vertragsstaaten:
**AT BE FR IT NL**

(56) Entgegenhaltungen:
**EP-A- 0 155 671**
**AU-B- 473 199**
**FR-A- 1 155 930**
**FR-B- 2 289 794**

(73) Patentinhaber: **Geberit AG, Schachenstrasse 77,**
**CH-8645 Jona(CH)**

(72) Erfinder: **Dolder, René, Eichwiesstrasse 29,**
**CH-8645 Jona(CH)**

(74) Vertreter: **White, William et al,**
**PATENTANWALTS-BUREAU ISLER AG**
**Postfach 6940 Walchestrasse 23, CH-8023 Zürich(CH)**

## Beschreibung

Die Erfindung betrifft einen Bolzen und ein Gegenstück nach dem Oberbegriff des Anspruchs 1.

Zur Befestigung der Lagerplatte eines sogenannten Unterputz-Spülkastens an der dahinterliegenden Spülkastenwandung sind Gewindestangen als Distanzteile im Gebrauch, die entsprechend dem Abstand zwischen der Lagerplatte und der Spülkastenwandung mehr oder weniger tief in die Gewindebohrung einer Befestigungslasche eingeschraubt werden. Diese Gewindestangen haben den Nachteil, dass das Einschrauben viel Zeit erfordern kann und dazu Werkzeuge erforderlich sind. Dieser Stand der Technik ergibt sich aus der CH-A 445 400.

Durch die FR-A 1 155 930 ist ein Bolzen und Gegenstück der im Oberbegriff des Anspruchs 1 genannten Gattung bekannt geworden. Um den Bolzen im Gegenstück zu fixieren, ist auf dem Gegenstück eine Stahldrahtfeder angebracht, von dem ein federndes Ende beim gegenseitigen Verdrehen der beiden Teile über einen Gewindeteil des Bolzens gezogen wird und an diesem Gewindeteil einrastet. Die Herstellung der Stahldrahtfeder und ihre Befestigung am Bolzen ist vergleichsweise aufwendig.

Der Erfindung liegt die Aufgabe zugrunde, einen Bolzen und ein Gegenstück der eingangs genannten Gattung zu schaffen, welche diese Nachteile vermeidet. Der Bolzen und das Gegenstück sollen insbesondere die Montage von UnterputzSpülkasten erleichtern.

Diese Aufgabe wird durch die im Anspruch 1 gekennzeichnete Erfindung gelöst. Ausgestaltungen der Erfindung sind in den abhängigen Ansprüchen gekennzeichnet.

Der erfindungsgemässe Bolzen und sein Gegenstück sind nicht auf die oben genannte Verwendung in einem Spülkasten beschränkt, obwohl hier ein bevorzugtes Anwendungsgebiet liegt.

Der erfindungsgemässe Bolzen kann ohne Benutzung eines Werkzeugs schnell und in einfacher Weise mit der gewünschten Tiefe in die Ausnehmung des Gegenstücks eingesetzt werden und ist auch für eine blinde Montage geeignet. Der Bolzen ist auch dann zur Aufnahme relativ grosser Druckbelastungen geeignet, wenn er einstückig aus Kunststoff gefertigt ist.

Eine besonders günstige Kräfteverteilung ergibt sich, wenn die Zahnung, die Gegenzahnung sowie die Bereiche ohne diese Zahnung bzw. Gegenzahnung je aus zwei diametral gegenüberliegenden Teilen bestehen. Fertigungstechnisch vorteilhaft ist, wenn die genannten Bereiche sich in Achsrichtung erstreckende Nuten sind.

Um eine unbeabsichtigte Lösung des Bolzens zu verhindern, eignet sich eine Sperrvorrichtung, die als Drehrastsperrvorrichtung ausgebildet ist. Konstruktiv in einfacher Weise ist die Sperrvorrichtung als Nut und Kamm ausgeführt, wobei die Nut in der Ausnehmung und der Kamm auf der Mantelfläche des Bolzens angeordnet ist.

Der erfindungsgemässe Bolzen kann vorteilhaft als Distanzbolzen, Stehbolzen, zur Fixierung der Lagerplatte eines Unterputzspülkastens oder als Drückerstange einer Betätigungseinrichtung für einen Spülkasten verwendet werden. Eine solche Drückerstange ist in der DE-A-31 39 834 beschrieben.

Das Gegenstück kann beispielsweise als Befestigungslasche, in der Art einer Mutter oder als Platte ausgebildet sein. Das Gegenstück kann der Kastenkörper eines Spülkastens und insbesondere eines Unterputz-Spülkastens sein.

Ein Ausführungsbeispiel der Erfindung wird nun anhand der Zeichnung näher erläutert. Es zeigen:

Fig. 1 eine perspektivische Darstellung eines erfindungsgemässen Bolzens sowie Teile eines Unterputz-Spülkastens,

Fig. 2 in perspektivischer Darstellung einen Teil des Bolzens und ein Gegenstück vor dem Zusammenstecken,

Fig. 3 einen Teilquerschnitt durch einen Bolzen und ein Gegenstück, und

Fig. 4 einen Schnitt durch eine Zahnung bzw. Gegenzahnung.

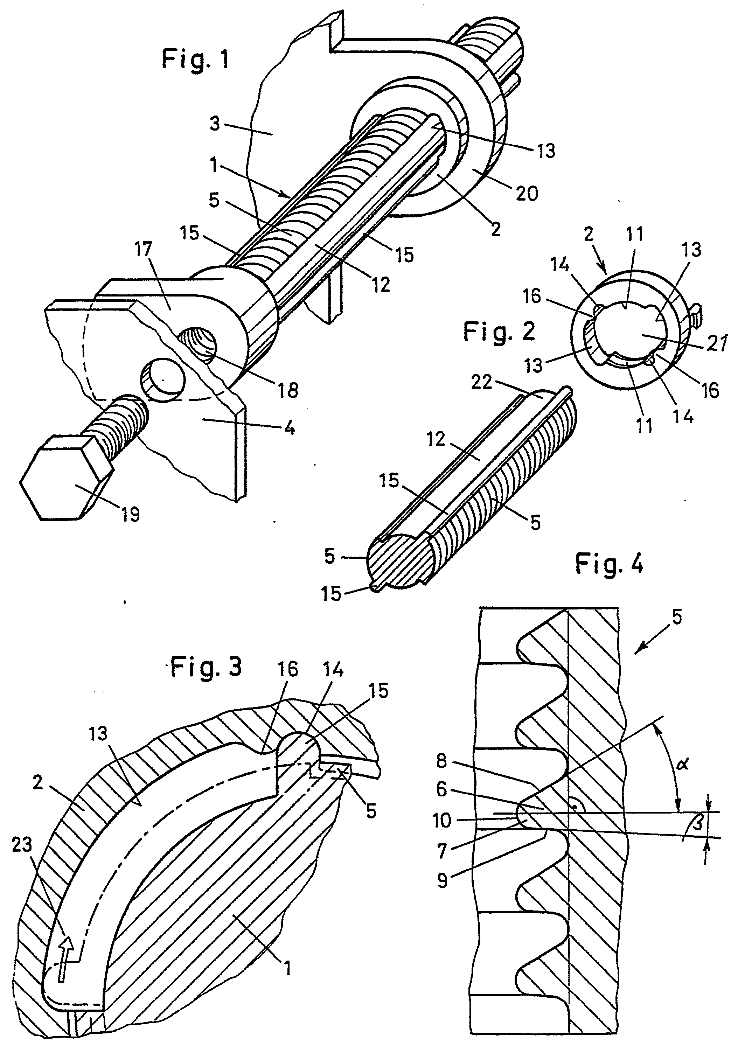

Die Fig. 1 zeigt einen Bolzen 1, der mit einem Gegenstück 2 verbunden ist, das seinerseits in eine hier nicht sichtbare Oeffnung einer Befestigungslasche 20 eingesetzt ist. Der Bolzen 1 ist einstückig aus einem geeigneten Kunststoff gefertigt, kann jedoch auch aus Metall hergestellt sein. Auf seiner Mantelfläche weist der Bolzen 1 Zahnungen 5 sowie Bereiche 12 ohne Zahnung auf. Wie die Fig. 2 zeigt, ist das Gegenstück 2 auf der Innenfläche einer Ausnehmung 21 mit Gegenzahnungen 11 und Bereichen 13 ohne Gegenzahnung 11 entsprechend ausgebildet. Die Bereiche 12 und 13 sind Nuten, die so ausgebildet sind, dass der Bolzen 1 in der in Fig. 2 gezeigten Drehstellung mit dem vorderen Ende 22 in die Ausnehmung 21 eingeschoben und darin in Achsrichtung frei verschoben werden kann. In dieser Stellung wird der Bolzen 1 im Gegenstück 2 verschoben, bis der gewünschte Abstand zwischen einem am Bolzen 1 angeformten Drehgriff 17 und der Befestigungslasche 20 bzw. der Wand 3 erreicht ist, was auch bei grossem Verstellweg sehr schnell erfolgen kann. Ist die gewünschte axiale Position erreicht, wird der Bolzen 1 am Drehgriff 17 um 90° gedreht, wobei die Zahnungen 5 mit den Gegenzahnungen 11 in Eingriff gebracht werden. Kurz bevor die vollständige Ueberdeckung von Zahnung 5 und Gegenzahnung 11 erreicht ist, gleitet ein auf der Mantelfläche des Bolzens 1 angeformter Kamm 15 über einen am Gegenstück 2 angeformten Rastnocken 16 und rastet in eine Nut 14 ein.

In der Fig. 3 ist der Bolzen 5 in der frei verschiebbaren Drehstellung strichpunktiert und in der eingerasteten Position ausgezogen gezeichnet, wobei der Pfeil 23 die Drehrichtung angibt. Der eingerastete Bolzen 1 ist axial in beiden Richtungen und radial in einer Drehrichtung auch mit relativ hohen Kräften nicht bewegbar, jedoch entgegen der Drehrichtung des Pfeils 23 um 90° drehbar.

Wie die Fig. 4 zeigt, weisen die Flanken 8 und 9 der Zähne 6 der Zahnung 5 sowie der Gegenzahnung 11 unterschiedliche Flankenwinkel $\alpha$ und $\beta$ auf, womit eine höhere Ausreissfestigkeit erreicht wird.

Je nach Anforderungen können die Flankenwinkel α und β jedoch auch gleich sein.

Die Flanken 8 und 9 können wie bei einem Gewinde eine leichte Steigung aufweisen, so dass der Bolzen 1 beim radialen Verdrehen axial in der einen oder anderen Richtung um einen bestimmten Weg verschoben wird. Bei dem dargestellten Ausführungsbeispiel ist diese Steigung jedoch null.

Der in Fig. 1 gezeigte Bolzen 1 verbindet eine Lagerplatte 4 eines Unterputz-Spülkastens mit dem Kastenkörper 3. Ein solcher Spülkasten ist in der DE-A-31 39 834 näher beschrieben. Zur Befestigung der Lagerplatte 4 am Bolzen 1 weist dieser eine Gewindebohrung 18 auf, in die eine durch eine Bohrung 24 der Lagerplatte 4 hindurchgesteckte Schraube 19 eingeschraubt ist. Es hat sich gezeigt, dass die Verbindung zwischen Bolzen 1 und Gegenstück mit sehr kleinem axialem und auch radialem Spiel hergestellt werden kann und die Lagerplatte 4 ohne zu "lottern" befestigt werden kann.

## Patentansprüche

1. Bolzen und Gegenstück, die durch axiales Zusammenstecken und anschliessend radiales Verdrehen miteinander verbindbar sind, wobei der Bolzen (1) auf seiner Mantelfläche eine Zahnung (5) und das Gegenstück (2) in einer den Bolzen (1) aufnehmenden Ausnehmung (21) eine mit der Zahnung (5) in Eingriff bringbare Gegenzahnung (11) aufweisen, und der Bolzen (1) auf seiner Mantelfläche und die Ausnehmung auf ihrer Innenfläche wenigstens je einen Bereich (12, 13) ohne die genannte Zahnung bzw. Gegenzahnung aufweisen, derart, dass der Bolzen (1) in einer Drehstellung zur Ausnehmung (21) mit einem Ende in die Ausnehmung (21) einschiebbar und darin in Längsrichtung verschiebbar ist, wobei eine Sperrvorrichtung (15, 16) vorgesehen ist, welche den eingesetzten Bolzen (1) gegen radiales Verdrehen sichert, dadurch gekennzeichnet, dass der Bolzen (1) auf seiner Mantelfläche (12) und das Gegenstück (2) auf der Innenfläche der Ausnehmung (21), jeweils ausserhalb der Zahnung (5) bzw. Gegenzahnung (11) angeformte Vorsprünge (15, 16) aufweisen, wobei der Vorsprung (15) am Bolzen (1) sich in Längsrichtung des Bolzens (1) und im wesentlichen über dessen ganze Länge erstreckt und die beiden Vorsprünge (15, 16) kurz vor Vollendung des radialen Verdrehens zur Bildung einer Rastsperre in gegenseitigen Eingriff gebracht werden.

2. Bolzen und Gegenstück nach Anspruch 1, dadurch gekennzeichnet, dass die Zahnung (5), die Gegenzahnung (11) sowie die Bereiche (12, 13) ohne Zahnung bzw. Gegenzahnung je aus zwei diametral gegenüberliegenden Teilen bestehen.

3. Bolzen und Gegenstück nach Anspruch 1 oder 2, dadurch gekennzeichnet, dass die Bereiche (12, 13) ohne Zahnung bzw. Gegenzahnung sich in Achsenrichtung erstreckende Nuten sind.

4. Bolzen und Gegenstück nach einem der Ansprüche 1 bis 3, dadurch gekennzeichnet, dass die Zahnung (5) bzw. Gegenverzahnung (11) sich in Umfangsrichtung erstreckende gerade Zähne (6) aufweisen.

5. Bolzen und Gegenstück nach einem der Ansprüche 1 bis 4, dadurch gekennzeichnet, dass die Flankenwinkel (α, β) der Zähne (6) unterschiedlich sind.

6. Bolzen und Gegenstück nach Anspruch 5, dadurch gekennzeichnet, dass der eine Flankenwinkel (α) etwa 30° und der andere Flankenwinkel (β) etwa 3° ist.

7. Bolzen und Gegenstück nach einem der Ansprüche 1 bis 6, dadurch gekennzeichnet, dass die Zahnkopfflächen (10) gerundet sind (Fig. 4).

8. Bolzen und Gegenstück nach Anspruch 8, dadurch gekennzeichnet, dass die Sperrvorrichtung als Drehrastsperrvorrichtung ausgebildet ist.

9. Bolzen und Gegenstück nach Anspruch 1, dadurch gekennzeichnet, dass in der Ausnehmung (21) eine Nut (14) und auf der Mantelfläche des Bolzens (1) ein in die Nut (14) einrastbarer Kamm (15) angeordnet sind.

10. Bolzen und Gegenstück nach Anspruch 9, dadurch gekennzeichnet, dass der Kamm (15) an einer Grenzlinie zwischen der Zahnung (5) und dem Bereich (12) ohne Zahnung angeordnet ist.

11. Bolzen und Gegenstück nach einem der Ansprüche 9 oder 10, dadurch gekennzeichnet, dass zwei diametral gegenüberliegende Kämme (15) bzw. Nuten (14) vorgesehen sind.

12. Verwendung des Bolzens nach Anspruch 1 als Distanzbolzen.

13. Verwendung des Bolzens nach Anspruch 1 als Stehbolzen.

14. Verwendung des Bolzens nach Anspruch 1 zur Fixierung der Lagerplatte eines Unterputz-Spülkastens (Fig. 1).

15. Verwendung des Bolzens nach Anspruch 1 als Drückerstange einer Betätigungseinrichtung für einen Spülkasten.

## Revendications

1. Boulon et contre-pièce, qui peuvent être assemblés mutuellement par un assemblage axial, suivi d'une rotation radiale, le boulon (1) comportant sur sa surface périphérique une denture (5) et la contre-pièce (2) comportant dans un évidement (21) recevant le boulon (1) une denture complémentaire (11) pouvant engréner avec la denture (5), et le boulon (1) comportant sur sa surface périphérique et l'évidement sur sa surface intérieure chacun au moins, une zone (12, 13) dépourvue de ladite denture, respectivement denture complémentaire, de telle façon que l'on peut introduire le boulon (1), dans une position de rotation par rapport à l'évidement (21), par une extrémité dans l'évidement (21) et l'y déplacer en direction longitudinale, un dispositif de blocage (15, 16) étant prévu, lequel empêche la rotation radiale du boulon (1) inséré, caractérisés en ce que le boulon (1) comporte à sa surface périphérique (12) et la contre-pièce (2) sur la surface intérieure de l'évidement (21), des saillies (15, 16) formées respectivement à l'extérieur de la denture (5) et de la denture complémentaire (11), la saillie (15) située sur le boulon (1) s'étendant dans la direction longitudinale du boulon (1) et pratiquement sur toute sa longueur et les deux saillies (15, 16) pouvant être amenées en prise mutuelle peu avant l'achèvement de la rotation radiale pour réaliser un verrouillage.

2. Boulon et contre-pièce selon la revendication 1, caractérisés en ce que la denture (5), la denture complémentaire (11), ainsi que les zones (12, 13) dépourvues de denture ou de denture complémentaire comprennent dans chaque cas deux parties diamétralement opposées.

3. Boulon et contre-pièce selon la revendication 1 ou 2, caractérisés en ce que les zones (12, 13) dépourvues de denture ou de denture complémentaire sont des rainures s'étendant en direction axiale.

4. Boulon et contre-pièce selon l'une des revendications 1 à 3, caractérisés en ce que la denture (5) et respectivement la denture complémentaire (11) comportent des dents droites (6) s'étendant en direction périphérique.

5. Boulon et contre-pièce selon l'une des revendications 1 à 4, caractérisés en ce que les angles d'engrènement ($\alpha$, $\beta$) des dents (6) sont différents.

6. Boulon et contre-pièce selon la revendication 5, caractérisés en ce que l'un des angles d'engrènement ($\alpha$) est d'environ 30° et l'autre angle d'engrènement ($\beta$) d'environ 3°.

7. Boulon et contre-pièce selon l'une des revendications 1 à 6, caractérisés en ce que les surfaces (10) des sommets des dents sont arrondies (figure 4).

8. Boulon et contre-pièce selon la revendication 1, caractérisés en ce que le dispositif de verrouillage se présente sous la forme d'un dispositif de verrouillage par encliquetage rotatif.

9. Boulon et contre-pièce selon la revendication 1, caractérisés en ce qu'une rainure (14) se trouve dans l'évidement (21) et une crête (15) pouvant s'engager dans la rainure (14) sur la surface périphérique du boulon (1).

10. Boulon et contre-pièce selon la revendication 9, caractérisés en ce que la crête (15) est placée sur une ligne de délimitation entre la denture (5) et la zone (12) de denture.

11. Boulon et contre-pièce selon l'une des revendications 9 ou 10, caractérisés en ce que deux crêtes (15) et respectivement rainures (14) diamétralement opposées sont prévues.

12. Utilisation du boulon selon la revendication 1 en boulon d'écartement.

13. Utilisation du boulon selon la revendication 1 en goujon fileté.

14. Utilisation du boulon selon la revendication 1 pour la fixation de la plaque de support d'un réservoir de chasse encastré (figure 1).

15. Utilisation du boulon selon la revendication 1 en tige de poussoir d'un dispositif d'actionnement pour réservoir de chasse.

**Claims**

1. Bolt and counterpiece, which can be connected by axial plugging together and subsequent radial turning with each other, the bolt (1) having toothing (5) on its jacket surface and the counterpiece (2) having countertoothing (11), which can be engaged with the toothing (5), in a recess (21) receiving the bolt (1), and the bolt (1) on its jacket surface and the recess on its inside surface having at least one region (12, 13) each without the said toothing or countertoothing in such a way that the bolt (1) can be pushed into the recess (21) with one end in a turned position to the recess (21) and can be displaced in the longitudinal direction in the recess (21), a stop device (15, 16) being provided, which secures the inserted bolt (1) against radial turning, characterized in that the bolt (1) on its jacket surface (12) and the counterpiece (2) on the inside surface of the recess (21) each have moulded-on projections (15, 16) outside the toothing (5) or the countertoothing (11), the projection (15) on the bolt (1) extending in the longitudinal direction of the bolt (1) and essentially over its entire length and the two projections (15, 16) mutually engaging shortly before completion of the radial turning to form a catch stop.

2. Bolt and counterpiece according to Claim 1, characterized in that the toothing (5), the countertoothing (11) and the regions (12, 13) without toothing or countertoothing each consist of two diametrically opposite parts.

3. Bolt and counterpiece according to Claim 1 or 2, characterized in that the regions (12, 13) without toothing or countertoothing are grooves extending in the direction of the axis.

4. Bolt and counterpiece according to one of Claims 1 to 3, characterized in that the toothing (5) or countertoothing (11) have straight teeth (6) extending in the circumferential direction.

5. Bolt and counterpiece according to one of Claims 1 to 4, characterized in that the flank angles ($\alpha$, $\beta$) of the teeth (6) are different.

6. Bolt and counterpiece according to Claim 5, characterized in that the one flank angle ($\alpha$) is approximately 30° and the other flank angle ($\beta$) is approximately 3°.

7. Bolt and counterpiece according to one of Claims 1 to 6, characterized in that the surfaces (10) of the tips of the teeth are rounded (Fig. 4).

8. Bolt and counterpiece according to Claim 8 [sic], characterized in that the stop device is constructed as a turn catch stop device.

9. Bolt and counterpiece according to Claim 1, characterized in that a groove (14) is arranged in the recess (21), and a ridge (15), which can click into the groove (14), is arranged on the jacket surface of the bolt (1).

10. Bolt and counterpiece according to Claim 9, characterized in that the ridge (15) is arranged on a borderline between the toothing (5) and the region (12) without toothing.

11. Bolt and counterpiece according to one of Claims 9 or 10, characterized in that two diametrically opposite ridges (15) or grooves (14) are provided.

12. Use of the bolt according to Claim 1 as distance bolt.

13. Use of the bolt according to Claim 1 as separator bolt.

14. Use of the bolt according to Claim 1 for fixing the bearing plate of a concealed flushing cistern (Fig. 1).

15. Use of the bolt according to Claim 1 as pusher rod of an actuating unit for a flushing cistern.

Fig. 1

Fig. 2

Fig. 3

Fig. 4